# EUROPÄISCHE PATENTSCHRIFT

(11) **EP 1 235 704 B1**
(45) Veröffentlichungstag und Bekanntmachung des Hinweises auf die Patenterteilung: **07.06.2006**
(21) Anmeldenummer: 01956313.9
(22) Anmeldetag: 11.07.2001
(51) Int. Cl.: B60S 1/34

(54) **WISCHERARM**
WIPER ARM
BRAS D'ESSUIE-GLACE

(30) Priorität: 21.07.2000 DE 10035462
(43) Veröffentlichungstag der Anmeldung: 04.09.2002
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/002597
(87) Internationale Veröffentlichungsnummer: WO 2002/008033

(56) Entgegenhaltungen:
- DE-A- 2 326 183
- DE-A- 19 833 488
- GB-A- 756 229
- GB-A- 1 435 778

## Beschreibung

### Stand der Technik

Die Erfindung geht aus von einem Wischarm nach dem Oberbegriff des Anspruchs 1. Ein derartiger Wischarm ist z.B. aus der GB-A-1 435 778 bekannt.

Aus der DE-A-23 26 183 ist ein Wischarm bekannt, der eine Abdeckkappe aus Kunststoff besitzt. Diese ist auf das Befestigungsteil aufgesteckt und wird von offenen Lageraugen schwenkbar auf einer Lagerbuchse des Abklappgelenks gehalten. Die Abdeckkappe deckt das Befestigungsteil vollständig ab, insbesondere den Anschlussbereich an eine Wischerwelle und das Gelenklager des Abklappgelenks. Ferner besitzt die Abdeckkappe an der Innenseite Raststege, die sie auf dem Befestigungsteil führen und halten. Das Gelenkteil greift mit seinem U-förmigen Profil im Bereich des Abklappgelenks über die Abdeckkappe, so dass seitliche Nietköpfe eines Gelenkstifts und zwischen dem Gelenkteil und der Abdeckkappe insbesondere an der Oberseite Spalte zu sehen sind, die für die Schwenkbewegung des Gelenkteils erforderlich sind. Hierdurch wird der optische Eindruck gestört.

Aus der GB-A-1 435 778 ist ein Wischarm mit einem Befestigungsteil und einem daran über ein Abklappgelenk angelenkten Gelenkteil bekannt. Am Befestigungsteil ist eine Abdeckung mittels einer Klippverbindung befestigt. Die Abdeckung besitzt eine Deckwand und daran anschließende Seitenwände und überdeckt im montierten Zustand das Befestigungsteil und das Abklappgelenk, wobei die Seitenwände der Abdeckung Seitenwände des Gelenkteils überlappen. Die Abdeckung ist unterteilt in ein Klippteil und eine Kappe. Beide Teile sind über ein so genanntes Filmscharnier im Bereich der Deckwand gelenkig miteinander verbunden. In montierter Stellung der Abdeckung sitzt das Klippteil fest auf dem Befestigungsteil und ist zum Befestigungsteil bzw. der Kappe weder schwenkbar noch in Längsrichtung verschiebbar. Zwischen der Deckwand des Klippteils und der Deckwand des Gelenkteils ist ein Zwischenraum vorgesehen, um eine Kollision zwischen der Abdeckung und dem Gelenkteil beim Abklappen des Gelenkteils zu vermeiden.

### Vorteile der Erfindung

Nach der Erfindung ist die Gelenkkappe auf der dem Gelenkteil zugewandten Seite des Abklappgelenks an dem Gelenkteil angelenkt und deckt das Abklappgelenk ab. In der montierten Position ist die Gelenkkappe auf der anderen Seite des Abklappgelenks am Befestigungsteil bzw. an der Abdeckkappe schwenkbar und in Längsrichtung verschiebbar geführt. Die Gelenkkappe weist einen U-förmigen Querschnitt auf, der dem Profil der Abdeckkappe und dem Profil des Gelenkteils angepasst ist, wodurch im Gelenkbereich ein fließender und harmonischer Übergang entsteht. Zudem ist der Gelenkstift abgedeckt, sodass das Abklappgelenk insgesamt eine aerodynamisch günstige Form erhält.

In vorteilhafter Weise besitzt die Gelenkkappe zum Befestigen an den Innenseiten ihrer Seitenwände Zapfen, die in Löcher der Seitenwände des Gelenkteils bzw. in Langlöcher der Seitenwände des Befestigungsteils eingreifen. Dabei sind die Zapfen so dimensioniert, dass sie während der Montage durch Auseinanderdrücken der Seitenwände der Gelenkkappe in diese Löcher einrasten und die Gelenkkappe auf einfache Weise und ohne zusätzlichen Aufwand auf das Gelenkteil aufgesteckt wird.

Während die Gelenkkappe in den kreisförmigen Löchern des Gelenkteils drehbar gelagert ist, dienen die Langlöcher im Befestigungsteil außerdem als Elemente zum kinematischen Führen der Gelenkkappe.

Liegt der Wischarm an der Fahrzeugscheibe an, überdecken die Enden der Seitenwände der Gelenkkappe die Seitenwände des Gelenkteils nach außen teilweise, während die Seitenwände der Abdeckkappe die Seitenwände der Gelenkkappe nach außen ein Stück überdecken. Zudem schließt sich in dieser gestreckten Position die Deckwand der Gelenkkappe bündig an die Deckwand der Abdeckkappe und des Gelenkteils an, so dass eine optisch geschlossene Form des Wischarms entsteht. Diese ist gleichzeitig strömungsgünstig und erzeugt kaum Windgeräusche.

Während des Abklappvorgangs, wird das Gelenkteil von der Fahrzeugscheibe abgehoben. Dabei ist die Kinematik der Gelenkkappe zweckmäßigerweise so ausgelegt, dass das dem Gelenkteil zugeordnete Ende der Gelenkkappe angehoben wird, während das zum Befestigungsteil weisende Ende der Gelenkkappe abgesenkt wird und in einen Freiraum zwischen der Abdeckkappe und dem Befestigungsteil eintaucht. Somit wird der Abklappvorgang durch die Gelenkkappe in keiner Weise behindert und das Abklappgelenk ist selbst in dieser Position abgedeckt. Beim Ablegen des Wischarms auf die Fahrzeugscheibe legen sich die Teile wieder lückenlos aneinander.

Bei der Abdeckung des erfindungsgemäßen Wischarms kann grundsätzlich der übliche Gelenkaufbau beibehalten werden. Sind das Gelenkteil und/oder das Befestigungsteil als Blechbiegeteil ausgeführt, können die für den Bewegungsablauf notwendigen Löcher und Langlöcher einfach und kostengünstig durch Stanzen hergestellt werden. Zudem ist es durch die Abdeckung im Gelenkbereich möglich, dass die Deckwand des Befestigungsteils im Gelenkbereich zurückgenommen wird. Die normalerweise geschlossene Form des Befestigungsteils im Bereich des Abklappgelenks ist nicht mehr notwendig, was ebenfalls den Fertigungsaufwand verringert.

Die Gelenkkappe und die Abdeckkappe sind vorzugsweise durch Spritzgießen aus Kunststoff hergestellt. Dieser soll vorteilhaft gleichzeitig verschleißfest, formstabil und gegen ultraviolettes Licht stabilisiert oder lackierbar sein. Um Materialanhäufungen im Bereich der Zapfen zu vermeiden, werden diese zweckmäßigerweise im Querschnitt ringförmig gestaltet, wobei sie am Umfang Öffnungen aufweisen, die ein seitliches Entformen zulassen. Außerdem sind an die Innenseiten der Seitenwände der Gelenkkappe Rippen angeformt, die die Führung während des Abklappvorgangs verbessern und ein Verklemmen der Bauteile verhindern.

Ferner kann das Design der Abdeckkappe und der Gelenkkappe so aufeinander abgestimmt und an das Gelenkteil sowie an das Fahrzeug angepasst werden, dass die Hochwertigkeit des Produkts deutlich wird. Mit der Lösung der Kappen als Anbauteil kann bei Verwendung gleicher Gelenkbauteile das Design und damit das Erscheinungsbild des Scheibenwischers einfach verändert werden. Schließlich können bei einem kurzen Befestigungsteil die Abdeckkappe und die Gelenkkappe zu einem einstückigen Bauteil zusammengefasst werden, das in gleicher Weise wie die Gelenkkappe am Gelenkteil und Befestigungsteil angebracht ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Wischarms,
- Fig. 2: ein Gelenkteil des Wischarms in perspektivischer Ansicht von unten,
- Fig. 3: ein Befestigungsteil des Wischarms in perspektivischer Ansicht von unten,
- Fig. 4: eine Gelenkkappe in perspektivischer Ansicht von unten,
- Fig. 5: eine vergrößerte Darstellung einer Einzelheit V in Fig. 4,
- Fig. 6: eine vergrößerte Darstellung einer Einzelheit VI in Fig. 4,
- Fig. 7: einen Teillängsschnitt durch den Wischarm im gestreckten Zustand,
- Fig. 8: einen Teillängsschnitt durch den Wischarm in teilweise abgeklappter Stellung,
- Fig. 9: einen Teillängsschnitt durch den Wischarm in abgeklappter Stellung kurz vor dem Erreichen einer Endlage und

### Beschreibung der Ausführungsbeispiele

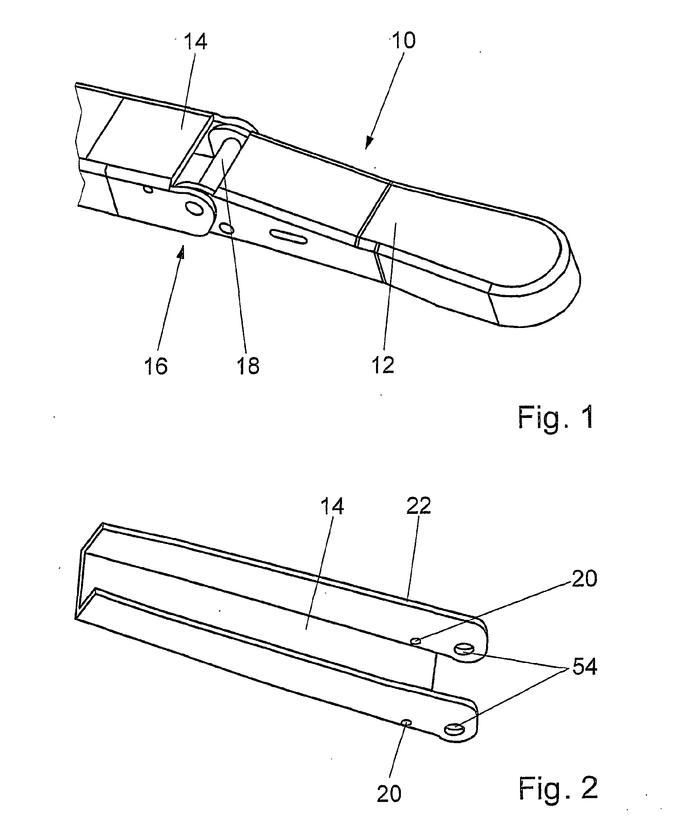

Ein Befestigungsteil 12 eines Wischarms 10 ist über ein Abklappgelenk 16 mit einem Gelenkteil 14 (Fig. 1) verbunden. Ein Gelenkstift 18, der in Löchern 54 in den Seitenwänden 22 des Gelenkteils 14 vernietet ist und über Lagerbohrungen 26 in seinen Seitenwänden 24 des Befestigungsteils 12 gelagert ist, bildet die Schwenkachse des Abklappgelenks.

Eine Gelenkkappe 32, die vorzugsweise aus Kunststoff im Spritzgussverfahren hergestellt ist, deckt das Abklappgelenk 16 ab. Sie wird am vormontierten Wischarm 10 auf das Gelenkteil 14 und auf das Befestigungsteil 12 gesteckt. Dazu weist die Gelenkkappe 32 einen an die benachbarten Bauteile 12, 14 des Wischarms 10 angepassten u-förmigen Querschnitt auf. An den Innenseiten 38 der Seitenwände 36 der Gelenkkappe 32 sind Zapfen 40 und 42 vorgesehen, die von außen nicht sichtbar sind und in Löcher 20 der Seitenwände 22 des Gelenkteils 14 bzw. in die Langlöcher 30 der Seitenwände 24 des Befestigungsteils 12 eingreifen.

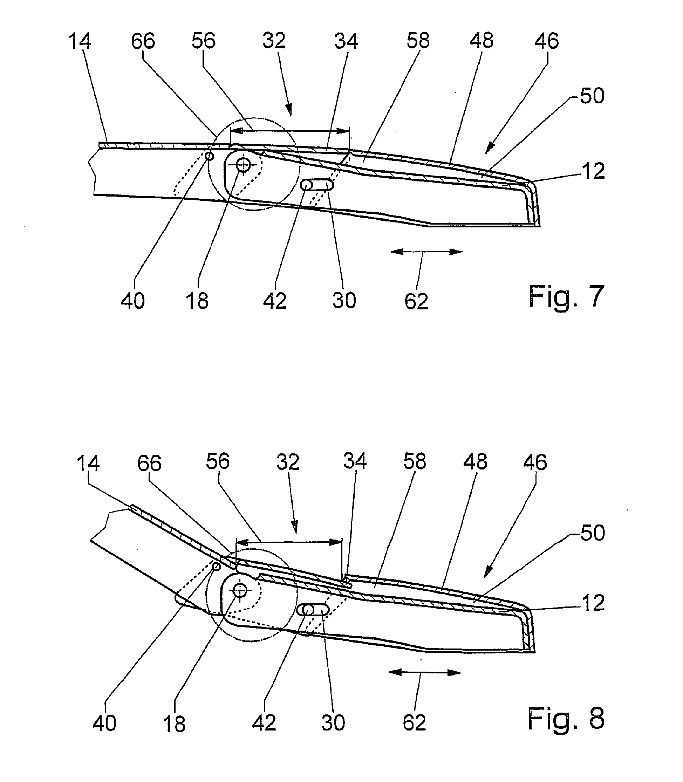

Im gestreckten Zustand, wenn der Scheibenwischer an einer Fahrzeugscheibe anliegt, schließt sich die Gelenkkappe 32 an das Gelenkteil 14 an und reicht bis zu einer Abdeckkappe 46, die den Befestigungsbereich des Wischarms 10 auf einer Wischerwelle abdeckt (Fig. 7). In dieser Stellung schließt die Deckwand 34 der Gelenkkappe 32 bündig mit der Deckwand 48 der Abdeckkappe 46 und der oberen Kontur des Gelenkteils 14 ab. Die Seitenwände 36 der Gelenkkappe 32 sind so gestaltet, dass sie die Seitenwände 22 des Gelenkteils 14 teilweise überdekken. Im Grenzbereich zwischen der Gelenkkappe 32 und der Abdeckkappe 46 werden die Seitenwände 36 der Gelenkkappe 32 von den Seitenwänden 50 der Abdeckkappe 46 überdeckt. Der Wischarm 10 weist somit einen stetigen, in der Größe aufeinander abgestimmten Übergang zwischen dem Gelenkteil 14, der Gelenkkappe 32 und der Abdeckkappe 46 auf, wodurch eine geschlossene und kompakte Form entsteht. In dieser Stellung sind die Zapfen 40 in den Löchern 20 im Gelenkteil 14 gelagert und die Zapfen 42 befinden sich in einer Endlage der Langlöcher 30 im Befestigungsteil 12. Beim Abklappen des Wischarms 10 von der Fahrzeugscheibe wird der Bewegungsablauf der Gelenkkappe 32 durch die Position der Löcher 20, der Langlöcher 30 und der Zapfen 40, 42 sowie durch die Form der Langlöcher 30 bestimmt wird.

Beim Abklappen des Gelenkteils14 beschreiben dessen Löcher 20 eine Kreisbahn 66 um den Gelenkstift 18 des Abklappgelenks. Entsprechend der Kreisbewegung wird die Gelenkkappe 32 im Bereich der Löcher 20 angehoben und in Richtung auf das entlegene Ende des Befestigungsteils 12 verschoben. Sie wird bei dieser Bewegung durch ihre Zapfen 42 geführt, die in die Langlöcher 30 am Befestigungsteil 12 eingreifen. Die Position der Löcher 20 am Gelenkteil 14 und die Position der Langlöcher 30 am Befestigungsteil 12 sind so aufeinander abgestimmt, dass es bei der Abklappbewegung zu keiner Kollision zwischen der Gelenkkappe 32 mit dem Gelenkteil 14, dem Befestigungsteil 12 oder der darauf fest sitzenden Abdeckkappe 46 kommt. Zusätzlich zu den Positionen der Löcher 20 und Langlöcher 30 relativ zueinander kann die Bewegung der Gelenkkappe 32 durch die Form der Langlöcher 30 beeinflusst werden, die in Längsrichtung 62 gerade oder gekrümmt verlaufen können.

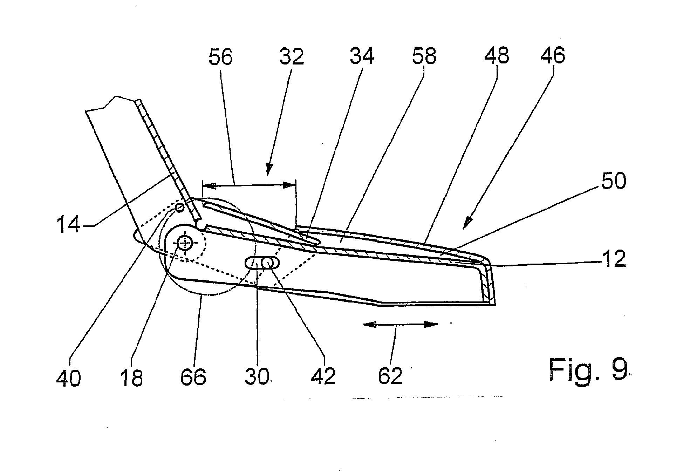

Beim Abklappen verringert sich im Vergleich zur gestreckten Position eine durch die Gelenkkappe 32 abgedeckte Lücke 56 zwischen dem Gelenkteil 14 und der Abdeckkappe 46. Um einen Freigang zu gewährleisten, wird die Deckwand 34 der Gelenkkappe 32, die eine konstante Länge hat, in einen Freiraum 58 zwischen der Abdeckkappe 46 und dem Befestigungsteil 12 abgesenkt bis zum Erreichen einer Endlage. Auch die ineinander verschachtelten Seitenwände 50, 36 und 22 überdecken sich in einem größeren Maße (Fig. 9).

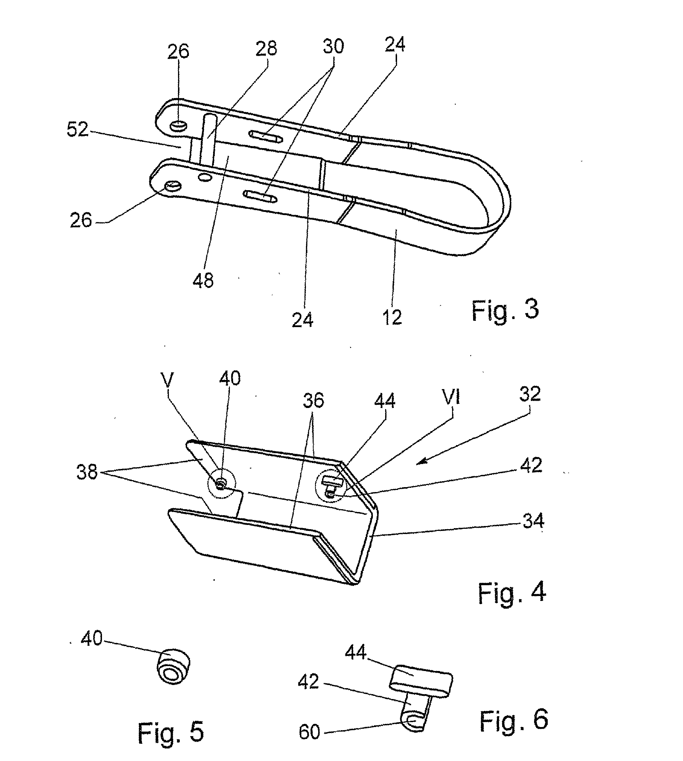

Um bei einem ausreichenden Durchmesser der Zapfen 40, 42 eine Materialanhäufung in.diesem Bereich zu vermeiden, weisen die Zapfen 40, 42 einen ringförmigen Querschnitt auf (Fig. 5).

Die Zapfen 42 besitzen am Umfang Öffnungen 60, die ein seitliches Entformen aus einer nicht näher dargestellten Spritzgussform ermöglichen (Fig. 6). Im Bereich der Zapfen 42 sind an den Innenseiten 38 der Seitenwände 36 der Gelenkkappe 32 Rippen 44 angeformt, die die Gelenkkappe 32 auf dem Befestigungsteil 12 führen.

Das Befestigungsteil 12 und das Gelenkteil 14 sind zweckmäßigerweise als Blechbiegeteil ausgeführt. In vorteilhafter Weise können die Löcher 20 für die Zapfen 40, die Langlöcher 30 für die Zapfen 42, Löcher für eine Federeinhängung 28, Löcher 54 für den Gelenkstift und die Lagerbohrungen 26 ohne nennenswerten Mehraufwand aus einem Blechrohling gestanzt werden. Im Bereich 52 des Abklappgelenks 16 ist die Deckwand 48 des Befestigungsteils 12 zurückgenommen.

## Patentansprüche

1. Wischarm (10) mit einem Befestigungsteil (12) und einem daran über ein Abklappgelenk (16) angelenkten Gelenkteil (14), wobei am Befestigungsteil (12) eine Abdeckkappe (46) befestigt ist, die eine Deckwand (48) und sich seitlich daran anschließende Seitenwände (50) aufweist, die das Befestigungsteil (12) abdecken, und sich an die Abdeckkappe (46) zum Gelenkteil (14) hin eine Gelenkkappe (32) anschließt, **dadurch gekennzeichnet, dass** die Gelenkkappe (32) auf der dem Gelenkteil (14) zugewandten Seite des Abklappgelenks (16) an dem Gelenkteil angelenkt ist und das Abklappgelenk (16) abdeckt, während sie in der montierten Position auf der anderen Seite des Abklappgelenks (16) am Befestigungsteil (12) bzw. an der Abdeckkappe (46) schwenkbar und in Längsrichtung (62) verschiebbar geführt ist.

2. Wischarm (10) nach Anspruch 1, **dadurch gekennzeichnet, dass** die Gelenkkappe (32) durch Aufstecken auf das Gelenkteil (14) und/oder auf das Befestigungsteil (12) montierbar ist.

3. Wischarm (10) nach einem der vorhergehenden Ansprüche, **dadurch gekennzeichnet, dass** die Gelenkkappe (32) an den Innenseiten (38) ihrer Seitenwände (36) Zapfen (40, 42) aufweist, die von außen nicht sichtbar sind und in Löcher (20) der Seitenwände (22) des Gelenkteils (14) bzw. in Langlöcher (30) der Seitenwände (24) des Befestigungsteils (12) eingreifen.

4. Wischarm (10) nach Anspruch 3, **dadurch gekennzeichnet, dass** die Zapfen (40, 42) so dimensioniert sind, dass sie durch Auseinanderdrücken der Seitenwände (36) der Gelenkkappe (32) in die Löcher (20) bzw. die Langlöcher (30) einrasten.

5. Wischarm (10) nach einem der Ansprüche 3 oder 4, **dadurch gekennzeichnet, dass** die Zapfen (40) und/oder die Zapfen (42) einen ringförmigen Querschnitt aufweisen.

6. Wischarm (10) nach Anspruch 5, **dadurch gekennzeichnet, dass** die Gelenkkappe (32) aus Kunststoff durch Spritzgießen hergestellt ist und die Zapfen (40) und/oder die Zapfen (42) am Umfang Öffnungen (60) aufweisen, die ein seitliches Entformen zulassen.

7. Wischarm (10) nach einem der vorhergehenden Ansprüche, **dadurch gekennzeichnet, dass** die Innenseiten (38) der Seitenwände (36) der Gelenkkappe (32) Rippen (44) aufweisen.

8. Wischarm (10) nach einem der vorhergehenden Ansprüche, **dadurch gekennzeichnet, dass** die Langlöcher (30) in ihrer Längserstreckung gekrümmt verlaufen.

9. Wischarm (10) nach einem der vorhergehenden Ansprüche, **dadurch gekennzeichnet, dass** die Gelenkkappe (32) und die Abdeckkappe (46) aus Kunststoff hergestellt sind.

10. Wischarm (10) nach Anspruch 9, **dadurch gekennzeichnet, dass** der Kunststoff gleichzeitig verschleißfest, formstabil und gegen ultraviolettes Licht stabilisiert ist.

11. Wischarm (10) nach Anspruch 9, **dadurch gekennzeichnet, dass** der Kunststoff gleichzeitig verschleißfest, formstabil und lackierbar ist.

12. Wischarm (10) nach einem der vorhergehenden Ansprüche, **dadurch gekennzeichnet, dass** die Enden der Seitenwände (36) der Gelenkkappe (32) die Seitenwände (22) des Gelenkteils (14) nach außen teilweise überdecken, während die Seitenwände (50) der Abdeckkappe (46) die Seitenwände (36) der Gelenkkappe (32) nach außen ein Stück überdecken.

13. Wischarm (10) nach einem der vorhergehenden Ansprüche, **dadurch gekennzeichnet, dass** die Deckwand (34) der Gelenkkappe (32) in der gestreckten Position des Wischarms (10) bündig mit der Deckwand (48) der Abdeckkappe (46) und der oberen Kontur des Gelenkteils (14) abschließt und dass die Kinematik der Gelenkkappe (32) so ausgelegt ist, dass beim Anheben des Gelenkteils (14) das zugeordnete Ende der Gelenkkappe (32) ebenfalls angehoben wird, während das Ende, das auf der Seite des Befestigungsteils (12) liegt, abgesenkt wird und in einen Freiraum (58) zwischen der Abdeckkappe (46) und dem Befestigungsteil (12) eintaucht.

14. Wischarm (10) nach einem der vorhergehenden Ansprüche, **dadurch gekennzeichnet, dass** das Design des Gelenkteils (14), der Gelenkkappe (32) und der Abdeckkappe (46) aufeinander abgestimmt sind.

15. Wischarm (10) nach einem der vorhergehenden Ansprüche, **dadurch gekennzeichnet, dass** die Deckwand (48) des Befestigungsteils (12) im Bereich (52) des Abklappgelenks (16) zurückgenommen ist.

## Claims

1. Wiper arm (10) with a fastening part (12) and an articulated part (14) which is coupled thereto via a fold-down joint (16), a covering cap (46) being fastened to the fastening part (12), the said covering cap having a top wall (48) and side walls (50) which laterally adjoin it and cover the fastening part (12), and the covering cap (46) is adjoined towards the articulated part (14) by a joint cap (32), **characterized in that** the joint cap (32) is coupled to the articulated part on that side of the fold-down joint (16) which faces the articulated part (14), and covers the fold-down joint (16) or, in the fitted position on the other side of the fold-down joint (16), it is guided on the fastening part (12) or on the covering cap (46) in a manner such that it can be pivoted and displaced in the longitudinal direction (62).

2. Wiper arm (10) according to Claim 1, **characterized in that** the joint cap (32) can be fitted by plugging it onto the articulated part (14) and/or onto the fastening part (12).

3. Wiper arm (10) according to one of the preceding claims, **characterized in that** the joint cap (32), on the insides (38) of its side walls (36), has pins (40, 42) which are not visible from the outside and engage in holes (20) of the side walls (22) of the articulated part (14) and, respectively, in elongated holes (30) of the side walls (24) of the fastening part (12).

4. Wiper arm (10) according to Claim 3, **characterized in that** the pins (40, 42) are dimensioned in such a manner that, by pressing apart the side walls (36) of the joint cap (32), they snap into the holes (20) and, respectively, the elongated holes (30).

5. Wiper arm (10) according to either of Claims 3 or 4, **characterized in that** the pins (40) and/or the pins (42) have an annular cross section.

6. Wiper arm (10) according to Claim 5, **characterized in that** the joint cap (32) is produced from plastic by injection moulding, and the pins (40) and/or the pins (42) have openings (60) on the circumference permitting lateral removal from the mould.

7. Wiper arm (10) according to one of the preceding claims, **characterized in that** the insides (38) of the side walls (36) of the joint cap (32) have ribs (44).

8. Wiper arm (10) according to one of the preceding claims, **characterized in that** the elongated holes (30) have a curved profile in their longitudinal extent.

9. Wiper arm (10) according to one of the preceding claims, **characterized in that** the joint cap (32) and the covering cap (46) are produced from plastic.

10. Wiper arm (10) according to Claim 9, **characterized in that** the plastic is simultaneously wear-resistant, dimensionally stable and stabilized against ultraviolet light.

11. Wiper arm (10) according to Claim 9, **characterized in that** the plastic is simultaneously wear-resistant, dimensionally stable and can be painted.

12. Wiper arm (10) according to one of the preceding claims, **characterized in that** the ends of the side walls (36) of the joint cap (32) partially overlap the side walls (22) of the articulated part (14) to the outside while the side walls (50) of the covering cap (46) overlap the side walls (36) of the joint cap (32) for a distance to the outside.

13. Wiper arm (10) according to one of the preceding claims, **characterized in that**, in the extended position of the wiper arm (10), the top wall (34) of the joint cap (32) ends flush with the top wall (48) of the covering cap (46) and with the upper contour of the articulated part (14), and **in that** the kinematics of the joint cap (32) is configured in such a manner that, when the articulated part (14) is raised, the associated end of the joint cap (32) is likewise raised while the end which lies on the side of the fastening part (12) is lowered and enters a clearance (58) between the covering cap (46) and the fastening part (12).

14. Wiper arm (10) according to one of the preceding claims, **characterized in that** the designs of the articulated part (14), of the joint cap (32) and of the covering cap (46) are matched to one another.

15. Wiper arm (10) according to one of the preceding claims, **characterized in that** the top wall (48) of the fastening part (12) is retracted in the region (52) of the fold-down joint (16).

## Revendications

1. Bras d'essuie-glace (10) comportant une pièce de fixation (12) et une pièce d'articulation (14) reliée à celle-ci de manière articulée par l'intermédiaire d'une articulation de relevage (16),
un chapeau (46) relié à la pièce de fixation (12), et ayant une paroi supérieure (48) reliée à des parois latérales (50), couvrant la pièce de fixation (12) et un cache d'articulation (32) rejoignant le chapeau (46) vers la pièce articulée (14),
**caractérisé en ce que**
le cache d'articulation (32) est articulé sur la pièce d'articulation du côté de l'articulation de relevage (16) tourné vers la pièce d'articulation (14) et elle couvre l'articulation de relevage (16) et à l'état monté, sur l'autre côté de l'articulation de relevage (16) elle est articulée à la pièce de fixation (12) ou au chapeau (46) et coulisse dans la direction longitudinale (62).

2. Bras d'essuie-glace (10) selon la revendication 1,
**caractérisé en ce que**
le cache d'articulation (32) est enfiché sur la pièce d'articulation (14) et/ou la pièce de fixation (12).

3. Bras d'essuie-glace (10) selon l'une des revendications précédentes,
**caractérisé en ce que**
le cache d'articulation (32) comporte sur les faces intérieures (38) de ses parois latérales (36), des tétons (40, 42) non visibles de l'extérieur, venant prendre dans des orifices (20) des parois latérales (22) de la pièce d'articulation (14) ou dans des trous oblongs (30) des parois latérales (24) de la pièce de fixation (12).

4. Bras d'essuie-glace (10) selon la revendication 3,
**caractérisé en ce que**
les tétons (40, 42) sont dimensionnés pour venir dans les orifices (20) ou les trous oblongs (30) lorsqu'on écarte les parois latérales (36) du cache d'articulation (32).

5. Bras d'essuie-glace (10) selon l'une des revendications 3 ou 4,
**caractérisé en ce que**
les tétons (40) et/ou les tétons (42) ont une section de forme annulaire.

6. Bras d'essuie-glace (10) selon la revendication 5,
**caractérisé en ce que**
le cache d'articulation (32) est injecté en matière plastique et les tétons (40) et/ou les tétons (42) ont des orifices périphériques (60) permettant un démoulage latéral.

7. Bras d'essuie-glace (10) selon l'une des revendications précédentes,
**caractérisé en ce que**
les faces intérieures (38) des parois latérales (36) du chapeau d'articulation (32) sont munies de nervures (44).

8. Bras d'essuie-glace (10) selon l'une des revendications précédentes,
**caractérisé en ce que**
les trous oblongs (30) sont cintrés dans leur extension longitudinale.

9. Bras d'essuie-glace (10) selon l'une des revendications précédentes,
**caractérisé en ce que**
le cache d'articulation (32) et le chapeau de recouvrement (46) sont fabriqués en matière plastique.

10. Bras d'essuie-glace (10) selon la revendication 9,
**caractérisé en ce que**
la matière plastique est résistante à l'usure, a une forme stable, et est stabilisée vis-à-vis de la lumière ultraviolette.

11. Bras d'essuie-glace (10) selon la revendication 9,
**caractérisé en ce que**
la matière plastique est résistante à l'usure, a une forme stable, et est susceptible d'être vernie.

12. Bras d'essuie-glace (10) selon l'une quelconque des revendications précédentes,
**caractérisé en ce que**
les extrémités des parois latérales (36) du cache d'articulation (32) couvrent en partie vers l'extérieur, les parois latérales (22) de la pièce d'articulation (14) alors que les parois latérales (50) du chapeau (46) couvrent vers l'extérieur une partie des parois latérales (36) du cache d'articulation (32).

13. Bras d'essuie-glace (10) selon l'une des revendications précédentes,
**caractérisé en ce que**
la paroi supérieure (34) du cache d'articulation (32) est à niveau avec la paroi supérieure (48) du chapeau (46) lorsque le bras d'essuie-glace (10) est en position allongée, et elle ferme le contour supérieur de la pièce d'articulation (14), la cinématique du cache d'articulation (32) étant conçue pour que lorsqu'on relève la pièce d'articulation (14), on relève également l'extrémité correspondante du cache d'articulation (32) alors que l'extrémité située du côté de la pièce de fixation (12) s'abaisse et passe dans l'espace libre (58) entre le chapeau de recouvrement (46) et la pièce de fixation (12).

14. Bras d'essuie-glace (10) selon l'une des revendications précédentes,
**caractérisé en ce que**
la forme de la pièce d'articulation (14) du cache d'articulation (32) et du chapeau de recouvrement (46) sont définies les unes par rapport aux autres.

15. Bras d'essuie-glace (10) selon l'une des revendications précédentes,
**caractérisé en ce que**
la paroi supérieure (48) de la pièce de fixation (12) est dégagée au niveau (52) de l'articulation de relevage (16).
